# EUROPEAN PATENT APPLICATION

(11) **EP 3 582 164 A1**
(43) Date of publication of application: **18.12.2019**
(21) Application number: 18751965.7
(22) Date of filing: 26.01.2018
(51) Int. Cl.: G06Q 20/10, G06Q 20/18, G07D 9/00

(54) **CUSTOMER TRANSACTION SYSTEM, AUTOMATED TELLER MACHINE, AND CUSTOMER TRANSACTION METHOD**

(30) Priority: 10.02.2017 JP 2017023300
(71) Applicant: Glory Ltd., Himeji-shi, Hyogo 670-8567 (JP)
(72) Inventor: TOKIDA, Minoru, Himeji-shi Hyogo 670-8567 (JP); NAGAI, Yuki, Himeji-shi Hyogo 670-8567 (JP); MORIWAKI, Sotaro, Himeji-shi Hyogo 670-8567 (JP)
(74) Representative: SSM Sandmair
(86) International application number: PCT/JP2018/002528
(87) International publication number: WO 2018/147098

(57) **Abstract**

In a customer transaction system, when a customer terminal device 10a transmits a withdrawal transaction request to a management device 20 (S1), the management device 20 performs a withdrawal transaction request to a financial system server 40 (S2) and deducts a withdrawal amount from an account balance. The management device 20 sets, on an automatic teller machine 30, a withdrawal limit based on the withdrawal amount (S3), generates a withdrawal code and notifies a customer terminal device 10b of the withdrawal code (S4). When the customer terminal device 10b with the withdrawal code being displayed on a display unit is held over the automatic teller machine 30, the automatic teller machine 30 reads the withdrawal code (S5), makes a withdrawal execution request to the management device 20 (S6), and performs withdrawal based on the withdrawal limit upon receiving withdrawal approval from the management device 20 (S7).

## Description

### [TECHNICAL FIELD]

The present invention relates to a customer transaction system, an automatic teller machine, and a customer transaction method which enable a customer to efficiently and speedily give cash to a person who cannot perform an account transaction in a financial institution.

### [BACKGROUND ART]

In one conventional technique, when data for a transaction inputted through a customer terminal device is transmitted to a web server, the web server generates a two-dimensional code of the transaction data and returns the code to the customer terminal device. An automatic teller machine (hereinafter referred to as "ATM") reads the two-dimensional code of the customer terminal device, the ATM converts the code to the transaction data and executes the transaction. An example of the aforementioned technique is disclosed in Patent Literature 1 below.

### [CITATION LIST]

### [PATENT LITERATURE]

[Patent Literature 1] Japanese Patent No. 4403883

### [SUMMARY OF THE INVENTION]

### [PROBLEMS TO BE SOLVED BY THE INVENTION]

In the technique disclosed in Patent Literature 1, however, the customer always needs to go to the ATM and execute the transaction with his/her terminal device. Therefore, the technique cannot deal with urgent giving/receiving of cash, such as a case where a customer has to immediately give cash to his/her child who is away from home. In particular, if a person who will receive cash does not have a bank account or has left a banking card at home or the like, the above problem becomes manifest.

Therefore, how efficiently a customer gives cash to a person who cannot perform an account transaction in a financial institution, is an important issue.

The present invention is made to solve the aforementioned problem in the conventional art, and an object of the present invention is to provide a customer transaction system, an automatic teller machine, and a customer transaction method which enable a customer to efficiently and speedily give cash to a person who cannot perform an account transaction in a financial institution.

### [SOLUTION TO THE PROBLEMS]

To solve the above problems and achieve the above objects, the present invention is provided with a customer terminal device, a management device, and an automatic teller machine. The customer terminal device has a transaction request unit configured to perform a transaction request including a withdrawal amount. The management device includes: a transaction data generating unit configured to generate transaction data from the withdrawal amount that is included in the transaction request from the transaction request unit of the customer terminal device; a transaction data transmission unit configured to transmit the transaction data generated by the transaction data generating unit to the customer terminal device; and a notification unit configured to notify a withdrawal limit. The automatic teller machine includes: a withdrawal limit setting unit configured to set the withdrawal limit notified from the management device; and a control unit configured to acquire the transaction data from the customer terminal device, and control withdrawal of money on the basis of the acquired transaction data.

According to the present invention, in the above configuration, upon accepting, from the customer terminal device, information relating to another customer terminal device that serves as a destination to which the transaction data is transmitted, the transaction data transmission unit transmits the transaction data to the other customer terminal device.

According to the present invention, in the above configuration, the transaction data generating unit generates a transaction code, which is either a one-dimensional code or a two-dimensional code, corresponding to the transaction data.

According to the present invention, in the above configuration, the management device notifies the customer terminal device of an automatic teller machine that is a candidate for a nearest withdrawal destination, on the basis of positional information of the customer terminal.

According to the present invention, in the above configuration, the management device further includes a specification unit configured to specify an automatic teller machine that performs withdrawal of money, on the basis of an instruction from the customer terminal.

According to the present invention, in the above configuration, the management device notifies the automatic teller machine of a limitation on a withdrawal amount within the withdrawal limit, on the basis of an instruction from the customer terminal device.

According to the present invention, in the above configuration, the management device further includes a withdrawal cancel requesting unit configured to cancel withdrawal if money has not been withdrawn by the customer terminal device within a predetermined time period in the automatic teller machine.

The present invention is provided with: a withdrawal limit setting unit configured to set a withdrawal limit corresponding to a withdrawal amount included in a transaction request; a reading unit configured to read a transaction code displayed on a customer terminal device; and a control unit configured to perform control such that a withdrawal amount corresponding to the transaction code read by the reading unit is withdrawn within the range of a withdrawal amount set in the withdrawal limit.

The present invention is provided with: a transaction request step in which a customer terminal device performs a transaction request including a withdrawal amount; a transaction data generation step in which a management device communicable with the customer terminal device generates transaction data from the withdrawal amount included in the transaction request; a transaction data transmission step in which the management device transmits the transaction data generated in the transaction data generation step to the customer terminal device; a notification step in which the management device notifies the automatic teller machine of a withdrawal limit; a withdrawal limit setting step of setting, by an automatic teller machine, the withdrawal limit notified from the management device; an acquisition step in which the automatic teller machine acquires the transaction data from the customer terminal device; and a control step in which control is performed such that the automatic teller machine performs withdrawal of money on the basis of the transaction data acquired in the acquisition step.

### [ADVANTAGEOUS EFFECTS OF THE INVENTION]

According to the present invention, a customer can efficiently and speedily give cash to a person who cannot perform an account transaction in a financial institution.

### [BRIEF DESCRIPTION OF THE DRAWINGS]

[FIG. 1] FIG. 1 is a diagram for explaining the concept of a customer transaction system according to a first embodiment.
[FIG. 2] FIG. 2 is a block diagram showing the customer transaction system according to the first embodiment.
[FIG. 3] FIG. 3 is a block diagram showing a customer terminal device shown in FIG. 2.
[FIG. 4] FIG. 4 is a block diagram showing a management device shown in FIG. 2.
[FIG. 5] FIG. 5 is a diagram for explaining an example of withdrawal destination device data shown in FIG. 4.
[FIG. 6] FIG. 6 is a diagram showing an example of withdrawal processing data shown in FIG. 4.
[FIG. 7] FIG. 7 is a block diagram showing an automatic teller machine shown in FIG. 2.
[FIG. 8] FIG. 8 is a diagram showing an example of withdrawal limit data shown in FIG. 7.
[FIG. 9] FIG. 9 is a flowchart showing a processing procedure of the customer transaction system according to the first embodiment.
[FIG. 10] FIG. 10 is a diagram for explaining notification of positional information of a customer terminal device that will receive withdrawn money.
[FIG. 11] FIG. 11 is a diagram for explaining the concept of a customer transaction system according to a second embodiment.
[FIG. 12] FIG. 12 is a flowchart showing a processing procedure of the customer transaction system according to the second embodiment.

### [DESCRIPTION OF EMBODIMENTS]

Hereinafter, preferable embodiments of a customer transaction system, an automatic teller machine, and a customer transaction method according to the present invention will be described in detail with reference to the accompanying drawings.

### [First embodiment]

### <Concept of customer transaction system according to the present invention>

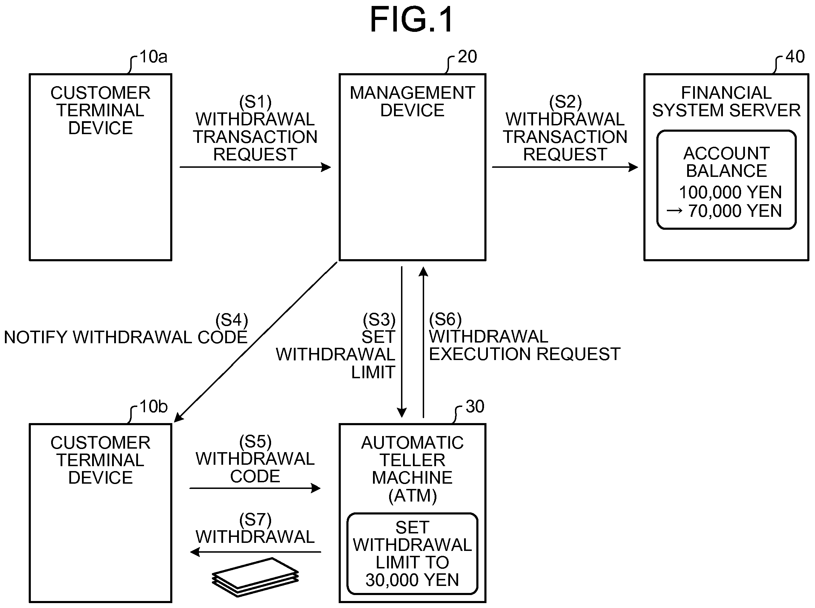

FIG. 1 is a diagram for explaining the concept of a customer transaction system according to a first embodiment. As shown in FIG. 1, the customer transaction system according to the first embodiment includes customer terminal devices 10, a management device 20, an automatic teller machine 30, and a financial system server 40. In FIG. 1, two customer terminal devices 10, i.e., a customer terminal device 10a and a customer terminal device 10b, are shown as an example. However, any number of customer terminal devices 10 may be included in the customer transaction system. Likewise, the customer transaction system may include a plurality of automatic teller machines 30 and/or a plurality of financial system servers 40.

Each customer terminal device 10 is a terminal device used by a customer. For example, a smartphone may be used as the customer terminal device 10. The management device 20 is a server device that is communicable with the customer terminal devices 10 and the automatic teller machine 30 and is connected to the financial system server 40. The management device 20 is able to perform internet banking.

The automatic teller machine (ATM) 30 is able to execute various transactions such as transfer, deposit, withdrawal, etc., by using bank cards, passbooks, etc. The financial system server 40 is, for example, a server of a financial institution, and executes various transactions through internet banking. For example, when a transfer request has been made through internet banking, the financial system server 40 accepts designated transfer-source account, transfer-destination account, and transfer amount, and executes the transfer. Then, the financial system server 40 updates the balances on the transfer-source account and the transfer-destination account.

Furthermore, in the customer transaction system according to the first embodiment, a customer can withdraw money from the automatic teller machine 30 through internet banking. In addition, by utilizing withdrawal through internet banking, the customer can efficiently and speedily give cash to a person, who cannot receive the cash by performing an account transaction in a financial institution.

FIG. 1 shows a case where a customer withdraws money from his/her account by operating the customer terminal device 10a, and gives cash to an operator of the customer terminal device 10b. As shown in FIG. 1, firstly, the customer terminal device 10a accepts the operation performed by the customer, and transmits, to the management device 20, a withdrawal transaction request including a withdrawal amount (S1).

Upon receiving the withdrawal transaction request from the customer terminal device 10a, the management device 20 performs a withdrawal transaction request to the financial system server 40 (S2). Upon receiving the withdrawal transaction request from the management device 20, the financial system server 40 deducts the withdrawal amount from the account balance. In an example of FIG. 1, the financial system server 40 deducts the withdrawal amount, 30,000 yen, from the account balance, 100,000 yen, and updates the account balance to 70,000 yen.

Thereafter, the management device 20 sets, on the automatic teller machine 30, a withdrawal limit based on the withdrawal amount (S3). In FIG. 1, a withdrawal limit of 30,000 yen is set on the automatic teller machine 30. In addition, the management device 20 generates a withdrawal code as transaction data to be used for withdrawal, and notifies the customer terminal device 10b of the withdrawal code (S4). The transaction data is data including, for example, the withdrawable amount, and information relating to the automatic teller machine 30 on which the withdrawal limit is set.

As for the form of the transaction data, a form readable by the automatic teller machine 30 is adopted. In this embodiment, data indicating the content of withdrawal transaction is subjected to coding to impart confidentiality to the data, and then the coded data is converted to a one-dimensional code (bar code) or a two-dimensional code to provide as a withdrawal code. The withdrawal code thus obtained is used as transaction data.

The customer terminal device 10b stores therein the withdrawal code received from the management device 20, and displays the withdrawal code on a display unit thereof. The operator of the customer terminal device 10b, who is carrying the customer terminal device 10b, goes to the installation place of the automatic teller machine 30, and holds the customer terminal device 10 with the withdrawal code being displayed on the display unit, over the automatic teller machine 30. Then, the automatic teller machine 30 captures an image of the withdrawal code and reads the withdrawal code from the image (S5) .

The automatic teller machine 30 transmits the read withdrawal code to the management device 20 to perform a withdrawal execution request (S6). The management device 20 performs authentication of the withdrawal code received from the automatic teller machine 30. When the authentication has succeeded, the management device 20 notifies the automatic teller machine 30 of withdrawal approval. Upon receiving the withdrawal approval from the management device 20, the automatic teller machine 30 performs withdrawal based on the monetary amount designated by the withdrawal code (S7).

As described above, the customer terminal device 10a transmits a transaction request including a withdrawal amount and the management device 20 generates a withdrawal code based on the withdrawal amount included in the transaction request. The management device 20 transmits the withdrawal code to the customer terminal device 10b, and notifies the automatic teller machine 30 of a withdrawal limit. The automatic teller machine 30 sets the notified withdrawal limit, and performs withdrawal of money based on the withdrawal code when acquiring the withdrawal code from the customer terminal device 10b. Therefore, a customer, who is the operator of the customer terminal device 10a, can efficiently and speedily give cash to the operator of the customer terminal device 10b, who cannot receive the cash by performing an account transaction in a financial institution.

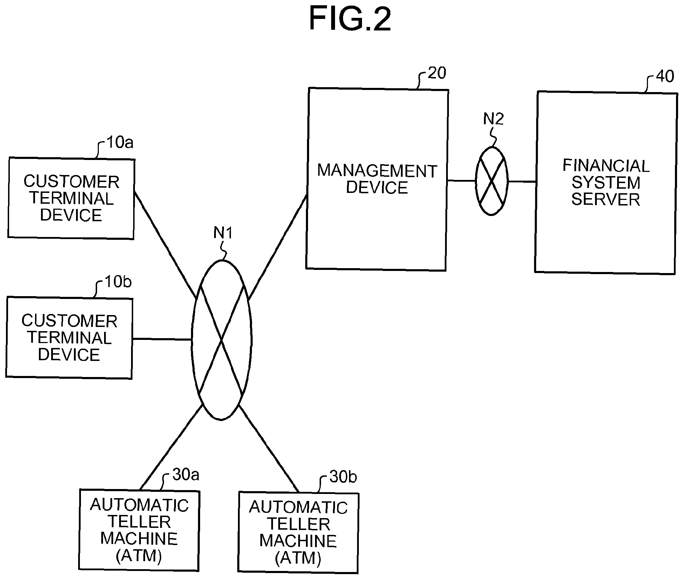

FIG. 2 is a block diagram showing the customer transaction system according to the present embodiment. As shown in FIG. 2, the management device 20 is connected to a plurality of customer terminal devices 10 and a plurality of automatic teller machines 30 via a network N1.

FIG. 2 shows a customer terminal device 10a and a customer terminal device 10b as examples of the customer terminal device 10. As the customer terminal device 10, any device, such as a smartphone, a personal computer, or a dedicated terminal, may be used. The customer terminal devices 10 can be connected to the network N1 via a wireless network.

FIG. 2 shows an automatic teller machine 30a and an automatic teller machine 30b as examples of the automatic teller machine 30. The automatic teller machine 30 is installed in any place such as a commercial facility as well as a financial institution.

The management device 20 is further connected to the financial system server 40 via a network N2. The financial system server 40 is, for example, a server of a financial institution. The network N2 is a secure network for internet banking. Meanwhile, the network N1 is a predetermined network such as the Internet.

### <Description of devices constituting system>

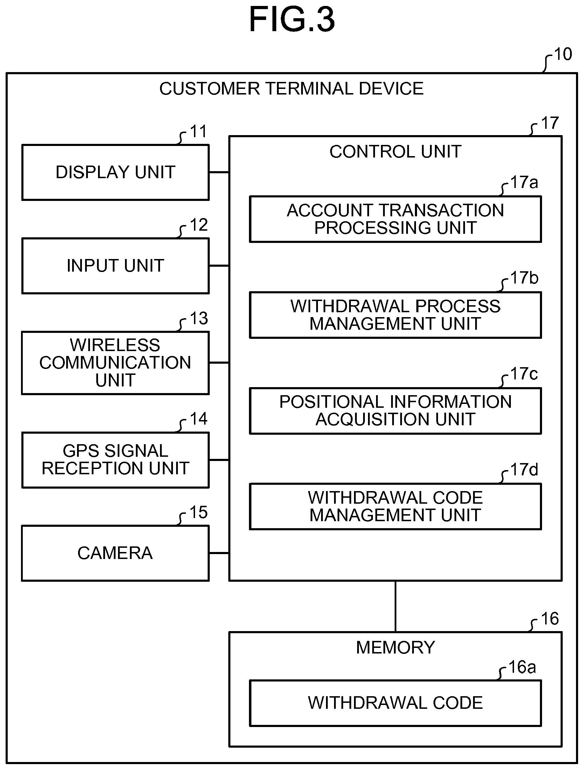

FIG. 3 is a block diagram showing the customer terminal device 10 shown in FIG. 2. As shown in FIG. 3, the customer terminal device 10 includes a display unit 11, an input unit 12, a wireless communication unit 13, a GPS signal receiving unit 14, a camera 15, a memory 16, and a control unit 17.

The display unit 11 is an output interface such as a liquid crystal panel. The input unit 12 is an input interface, such as keys or a touch panel, used for an input operation by an operator. The display unit 11 and the input unit 12 may be integrated with each other as a touch panel display.

The wireless communication unit 13 is a communication interface for performing communication with the management device 20 and the like. The GPS signal receiving unit 14 is a communication interface for receiving signals from a GPS (Global Positioning System) satellite. The camera 15 is an imaging device that can be used for capturing an image of the face of an operator.

The memory 16 is a storage device such as a hard disk drive or a nonvolatile memory, and stores a withdrawal code 16a and the like therein. The withdrawal code 16a is data received from the management device 20. The withdrawal code 16a is a two-dimensional code in this embodiment.

The control unit 17 controls the entirety of the customer terminal device 10. The control unit 17 includes an account transaction processing unit 17a, a withdrawal process management unit 17b, a positional information acquisition unit 17c, and a withdrawal code management unit 17d. In actuality, programs corresponding to these functional units are stored in a ROM or a nonvolatile memory which are not shown, and these programs are loaded onto a CPU (Central Processing Unit) and executed, thereby causing the CPU to execute processes corresponding to the account transaction processing unit 17a, the withdrawal process management unit 17b, the positional information acquisition unit 17c, and the withdrawal code management unit 17d.

The account transaction processing unit 17a performs a withdrawal transaction request to the management device 20. Specifically, the account transaction processing unit 17a firstly acquires information necessary for user authentication from the input unit 12 or the like, and transmits the information to the management device 20. The information necessary for user authentication is a user ID, a password, etc. Alternatively, biological information of an operator may be used as information for user authentication. For example, a face image of the operator, captured by the camera 15, may be used, or a fingerprint sensor or the like may be further provided. After the user authentication, the account transaction processing unit 17a transmits a withdrawal transaction request including a withdrawal amount to the management device 20.

The withdrawal process management unit 17b performs a process relating to management of withdrawal transaction. Specifically, the withdrawal process management unit 17b designates an automatic teller machine 30 to be used for withdrawal. For example, when a specific postal address or positional information acquired by the positional information acquisition unit 17c is transmitted to the management device 20, the management device 20 presents, as candidates, automatic teller machines 30 located near the address or position, so that the operator can select an automatic teller machine 30 to be used for transaction from among the presented automatic teller machines 30.

When the customer terminal device 10 used for performing the withdrawal transaction request is different from the customer terminal device 10 used for receiving money withdrawn from the automatic teller machine 30 by using the withdrawal code, the positional information is acquired from the positional information acquisition unit 17c of the customer terminal device 10 used for receiving the withdrawn money. The case where the customer terminal device 10 used for performing the withdrawal transaction request is different from the customer terminal device 10 used for receiving the withdrawn money will be described below in detail.

The withdrawal process management unit 17b sets a deadline for use of the withdrawal code. Although details are described below, if the withdrawal code has been nullified for exceeding the deadline, the process performed for the withdrawal code is canceled.

Furthermore, the withdrawal process management unit 17b sets a transmission destination of the withdrawal code. The transmission destination of the withdrawal code is preferably the address of the customer terminal device 10 that will be used for receiving the withdrawn money by using the withdrawal code. However, another transmission destination can be set according to need.

The positional information acquisition unit 17c calculates positional information of the customer terminal device 10 on the basis of a signal received from the GPS signal receiving unit 14. The calculated positional information is outputted to the withdrawal process management unit 17b and is used for designating an automatic teller machine 30, for example.

The withdrawal code management unit 17d manages the withdrawal code received from the management device 20. Upon receiving the withdrawal code from the management device 20, the withdrawal code management unit 17d stores the withdrawal code in the memory 16. The withdrawal code 16a stored in the memory 16 is displayed on the display unit 11 at any timing. The withdrawal code 16a may be associated with relevant information. For example, the withdrawal code 16a is stored in the memory 16 while being associated with, for example, the monetary amount, condition of withdrawal, limitation of withdrawal, the installation place of the specified machine, etc. Thus, the operator can check these pieces of information at any timing.

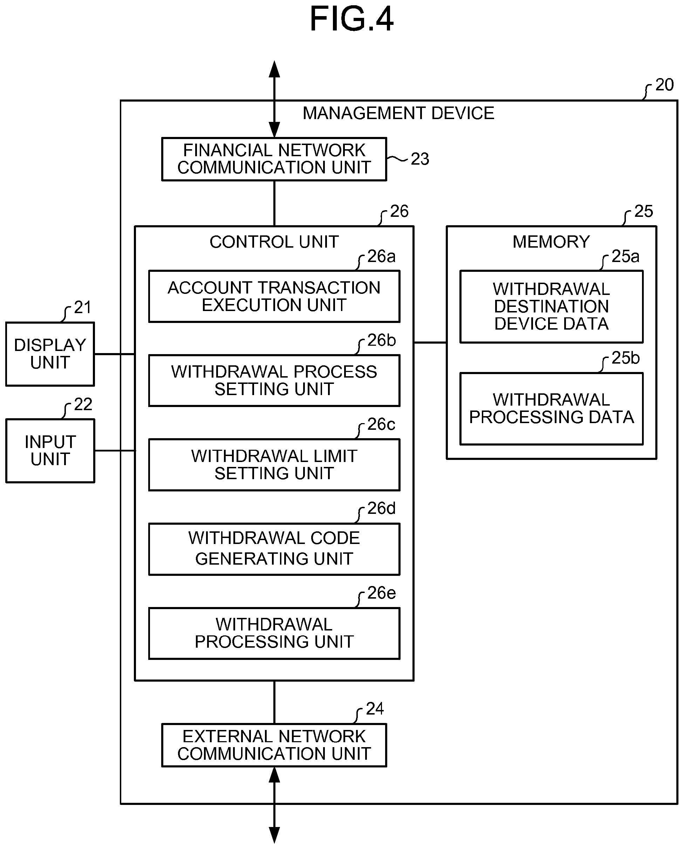

FIG. 4 is a block diagram showing the management device 20 shown in FIG. 2. The management device 20 includes a display unit 21, an input unit 22, a financial network communication unit 23, an external network communication unit 24, a memory 25, and a control unit 26.

The display unit 21 is a display device such as a liquid crystal display device. The input unit 22 is an input device such as a keyboard or a mouse. The financial network communication unit 23 is an interface that connects to the network N2 and performs data communication with the financial system server 40. The external network communication unit 24 is an interface that connects to the network N1 and performs data communication with the customer terminal device 10, the automatic teller machine 30, and the like.

The memory 25 is a storage device such as a hard disk drive or a nonvolatile memory, and stores withdrawal destination device data 25a and withdrawal processing data 25b therein. The withdrawal destination device data 25a is data for managing a device such as the automatic teller machine 30 that can read a withdrawal code and dispense money for withdrawal. This data 25a indicates a device ID that uniquely specifies a device, device type, installation place, service hours, inventory amount, already-set withdrawal limit, etc. The withdrawal processing data 25b is data for managing a withdrawal transaction request from the customer terminal device 10. This data 25b indicates reception date/time, account holder, code transmission destination, withdrawal due date, withdrawal destination device, withdrawal limit, withdrawal code, etc.

The control unit 26 controls the entirety of the management device 20. The control unit 26 includes an account transaction execution unit 26a, a withdrawal process setting unit 26b, a withdrawal limit setting unit 26c, a withdrawal code generating unit 26d, and a withdrawal processing unit 26e. In actuality, programs corresponding to these functional units are stored in a ROM or a nonvolatile memory which are not shown, and these programs are loaded onto a CPU (Central Processing Unit) and executed, thereby causing the CPU to execute processes corresponding to the account transaction execution unit 26a, the withdrawal process setting unit 26b, the withdrawal limit setting unit 26c, the withdrawal code generating unit 26d, and the withdrawal processing unit 26e.

Upon receiving a withdrawal transaction request from the customer terminal device 10, the account transaction execution unit 26a communicates with the financial system server 40, and deals with the withdrawal transaction request through internet banking. Specifically, the account transaction execution unit 26a receives information for user authentication (user ID, password, face image, or the like) from the customer terminal device 10, and executes user authentication. Upon success of the user authentication, the account transaction execution unit 26a executes account transaction. In this account transaction, the account and the withdrawal amount specified by the withdrawal transaction request are used, and the withdrawal amount is deducted from the account balance. Therefore, on the financial institution end, the withdrawal through internet banking is completed when the account transaction has been executed.

The withdrawal process setting unit 26b performs setting relating to withdrawal. The withdrawal process setting unit 26b designates an automatic teller machine 30 to be used for withdrawal, and sets a withdrawal due date. The withdrawal process setting unit 26b acquires, as appropriate, information about machines usable as withdrawal destination, and manages the information as withdrawal destination device data 25a. The withdrawal process setting unit 26b designates an automatic teller machine 30 to be used for withdrawal, by using the withdrawal destination device data 25a.

Specifically, the withdrawal process setting unit 26b receives a postal address or positional information from the customer terminal device 10, and searches the withdrawal destination device data 25a for automatic teller machines 30 or the like located near the address or position. Then, the withdrawal process setting unit 26b refers to the inventory amounts and the already-set withdrawal limits of the machines obtained as the search results, presents, as candidates, the machines of appropriate inventory amounts to the customer terminal device 10, and sets a machine selected from the candidates as a designated machine. The condition for the appropriate inventory amount is that the inventory amount is larger than the total of a newly-set withdrawal limit and an already-set withdrawal limit.

If withdrawal cannot be dealt with by a single machine, a plurality of automatic teller machines located near the address/position can also be designated. For example, as for withdrawal of 500,000 yen, a withdrawal limit of 200,000 yen is set on the first automatic teller machine 30 and a withdrawal limit of 300,000 yen is set on the second automatic teller machine 30.

Withdrawal limits can be set on a plurality of automatic teller machines 30 located in different places. If withdrawal codes are generated for the respective withdrawal limits and are notified to different users, it is possible to distribute money corresponding to the withdrawal amount in one account transaction to a plurality of persons.

A description is now given of the relationship between a withdrawal amount of an account transaction and a withdrawal limit set on an automatic teller machine 30. A withdrawal limit set on an automatic teller machine 30 indicates money that is withdrawable from the automatic teller machine 30. The withdrawal limit is equal to or less than the withdrawal amount. If the withdrawal limit coincides with the withdrawal amount, it is regarded that all the money corresponding to the monetary amount that was withdrawn from the account is being deposited in the automatic teller machine 30. Meanwhile, if the withdrawal limit is less than the withdrawal amount, it is regarded that the money corresponding to the withdrawal limit is being deposited in the automatic teller machine 30. As for a difference between the withdrawal amount and the withdrawal limit, a machine to be used for withdrawal thereof remains undesignated. As for this difference, a withdrawal limit can be newly set on the automatic teller machine 30.

When a plurality of withdrawal limits are set, the total of the withdrawal limits should be equal to or less than the withdrawal amount. The plurality of withdrawal limits may be set on the same automatic teller machine 30 or may be set on different automatic teller machines 30. For example, when withdrawal codes are generated for a plurality of withdrawal limits set on the same automatic teller machine 30 and are notified to different users, it is possible to distribute cash from the same automatic teller machine 30 to the respective users.

Moreover, the inventory amount of the automatic teller machine 30 may be adjusted by withdrawal. For example, when a withdrawal limit is set on an automatic teller machine 30 in a nearly full state in which the inventory amount is near the upper limit of money storage capacity, the near-full state can be solved when stored money corresponding to the withdrawal limit is used for withdrawal. Thus, when the withdrawal limit can be used for adjusting the inventory amount of the automatic teller machine 30 as described above, a privilege (e.g., a preferential fee) may be imparted to designation of the corresponding automatic teller machine 30 so as to motivate the customer to select the corresponding automatic teller machine 30.

The withdrawal process setting unit 26b can set a due date for use of a withdrawal code. As for a withdrawal due date which is a deadline for use of the withdrawal code, it is possible to set an unlimited duration or a predetermined duration as an initial value. The withdrawal due date may be changeable from the customer terminal device 10. A restriction may be placed on change of the withdrawal due date performed by using the customer terminal device 10.

The withdrawal process setting unit 26b can set transmission destinations of withdrawal codes. The transmission destinations can be individually set for the respective withdrawal codes. For example, when a plurality of withdrawal limits are set for one withdrawal amount, withdrawal codes are generated for the respective withdrawal limits, and a transmission destination is set for each withdrawal code. Also, it is possible to set a plurality of transmission destinations for one withdrawal code. In this case, withdrawal is allowed only when the withdrawal code is used for the first time, and withdrawal using the already-used withdrawal code is not allowed.

The withdrawal limit setting unit 26c performs a process of notifying an automatic teller machine 30, which is designated as a withdrawal destination device by the withdrawal process setting unit 26b, of the set withdrawal limit. Upon receiving this notification, the automatic teller machine 30 performs setting of a withdrawal limit corresponding to withdrawal from the automatic teller machine 30. When a withdrawal due date has been set, the withdrawal limit setting unit 26c notifies the withdrawal due date together with the withdrawal limit.

The withdrawal code generating unit 26d generates a withdrawal code as transaction data corresponding to a withdrawal limit that is set by the withdrawal process setting unit 26b. The withdrawal code includes various types of information necessary for withdrawal, such as a monetary amount, withdrawal due date, etc.

As for the form of the withdrawal code, a form readable by the automatic teller machine 30 is adopted. For example, data indicating information about a withdrawal limit is subjected to coding to impart confidentiality to the data, and then the coded data is converted to a one-dimensional code (barcode) or a two-dimensional code.

The withdrawal code generating unit 26d transmits the generated withdrawal code to a customer terminal device 10 designated as a transmission destination, and registers the withdrawal code in the withdrawal processing data 25b. When being registered in the withdrawal processing data 25b, the withdrawal code is associated with reception date/time, account holder, code transmission destination, withdrawal due date, withdrawal destination device, withdrawal limit, etc. These pieces of information may be notified to the customer terminal device 10 according to need. When the withdrawal limit setting unit 26c notifies the automatic teller machine 30 of the withdrawal limit, the withdrawal code may also be notified. The account holder is a holder of the account on which the account transaction execution unit 26a performs withdrawal through internet banking.

The withdrawal processing unit 26e executes withdrawal using a withdrawal code. Specifically, when the automatic teller machine 30 reads a withdrawal code, the withdrawal processing unit 26e receives the withdrawal code from the automatic teller machine 30. Then, the withdrawal processing unit 26e performs authentication of the withdrawal code with reference to the received withdrawal code and the withdrawal processing data 25b.

The authentication of the withdrawal code succeeds when the received withdrawal code coincides with the withdrawal code registered in the withdrawal processing data 25b, the device that has transmitted the withdrawal code coincides with the withdrawal destination device, and the withdrawal due date has not been exceeded.

Upon success of the authentication, the withdrawal processing unit 26e transmits a withdrawal approval notification. Upon receiving the withdrawal approval notification, the automatic teller machine 30 that has transmitted the withdrawal code performs withdrawal based on the monetary amount designated by the withdrawal code.

The withdrawal processing unit 26e periodically refers to the withdrawal processing data 25b. When a withdrawal code exceeding the withdrawal due date is present, the withdrawal processing unit 26e cancels withdrawal regarding the withdrawal code. Specifically, the withdrawal processing unit 26e communicates with the financial system server 40, cancels the account transaction performed through internet banking, and adds the withdrawal amount to the account balance. When cancellation of withdrawal has been performed, the customer terminal device 10 or the like is notified of the withdrawal cancellation according to need.

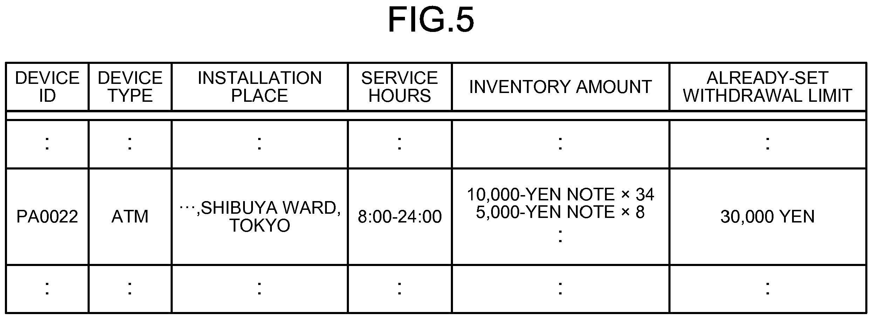

FIG. 5 is a diagram for explaining an example of the withdrawal destination device data shown in FIG. 4. As shown in FIG. 5, the withdrawal destination device data 25a is data indicating, in an associated manner, device ID that uniquely specifies an automatic teller machine 30, device type, installation place, service hours, inventory amount, already-set withdrawal limit, etc.

FIG. 5 shows a state where device ID "PA0022" is associated with device type "ATM", installation place "···, Shibuya Ward, Tokyo", service hours "8:00-24:00", inventory amount "10,000-yen note × 34, 5,000-yen note × 8, ···", already-set withdrawal limit "30,000 yen", etc. As for the device type, other devices, such as a money changer, capable of depositing/dispensing may be used as well as "ATM". The already-set withdrawal limit indicates the total of withdrawal limits set on the device. That is, a remainder obtained by deducting the already-set withdrawal limit from the inventory amount corresponds to money that is withdrawable from the device.

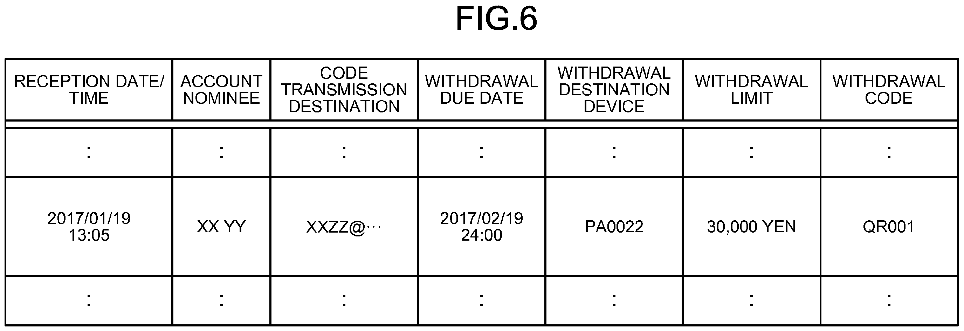

FIG. 6 is a diagram showing an example of the withdrawal processing data shown in FIG. 4. As shown in FIG. 6, the withdrawal processing data 25b is data indicating, in an associated manner, reception date/time, account holder, code transmission destination, withdrawal due date, withdrawal destination device, withdrawal limit, withdrawal code, etc.

FIG. 6 shows a case where reception date/time "2017/01/19, 13:05", account holder "XX YY", code transmission destination "XXZZ@···", withdrawal due date "2017/02/19, 24:00", withdrawal destination device "PA0022", withdrawal limit "30,000 yen", and withdrawal code "QR001" are associated with each other.

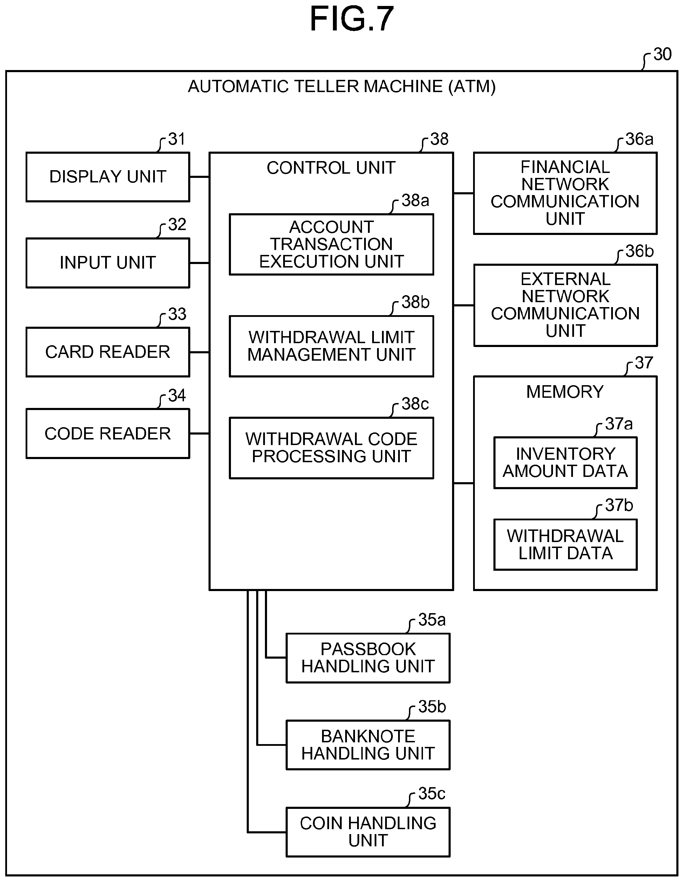

FIG. 7 is a block diagram showing the automatic teller machine 30 shown in FIG. 2. The automatic teller machine 30 includes a display unit 31, an input unit 32, a card reader 33, a code reader 34, a passbook handling unit 35a, a banknote handling unit 35b, a coin handling unit 35c, a financial network communication unit 36a, an external network communication unit 36b, a memory 37, and a control unit 38.

The display unit 31 is an output interface such as a liquid crystal panel. The input unit 32 is an input interface, such as keys or a touch panel, used for an input operation by an operator. The display unit 31 and the input unit 32 may be integrated with each other as a touch panel display.

The card reader 33 is used for reading a cash card. The code reader 34 is used for reading a withdrawal code. For example, when the withdrawal code is a two-dimensional code, the code reader 34 is a camera that captures an image of the two-dimensional code.

The passbook handling unit 35a accepts an inserted passbook, and performs, for example, entry of transaction records. In addition, the passbook handling unit 35a stores new passbooks therein, and performs carry-over of a passbook and issuance of a new passbook.

The banknote handling unit 35b handles deposit/withdrawal of banknotes. The banknote handling unit 35b accepts insertion of banknotes, recognizes the denominations and the number of the inserted banknotes, and stores the banknotes for each denomination. When withdrawal is needed, the banknote handling unit 35b feeds out banknotes from denomination-specific storage units and dispenses the banknotes.

The coin handling unit 35c handles deposit/withdrawal of coins. The coin handling unit 35c accepts insertion of coins, recognizes the denominations and the number of the inserted coins, and stores the coins for each denomination. When withdrawal is needed, the coin handling unit 35c feeds out coins from denomination-specific storage units and dispenses the coins.

The financial network communication unit 36a is an interface that connects to the network N2 and performs data communication with the financial system server 40. The external network communication unit 36b is an interface that connects to the network N1 and performs data communication with the automatic teller machine 30.

The memory 37 is a storage device such as a hard disk drive or a nonvolatile memory, and stores inventory amount data 37a, withdrawal limit data 37b, and the like therein. The inventory amount data 37a indicates denomination-specific amounts of money stored in the banknote handling unit 35b and the coin handling unit 35c. The withdrawal limit data 37b is data relating to a withdrawal limit notified from the management device 20.

The control unit 38 controls the entirety of the automatic teller machine 30. The control unit 38 includes an account transaction execution unit 38a, a withdrawal limit management unit 38b, and a withdrawal code processing unit 38c. In actuality, programs corresponding to these functional units are stored in a ROM or a nonvolatile memory which are not shown, and these programs are loaded onto a CPU (Central Processing Unit) and executed, thereby causing the CPU to execute processes corresponding to the account transaction execution unit 38a, the withdrawal limit management unit 38b, and the withdrawal code processing unit 38c.

The account transaction execution unit 38a executes various transactions by using cash cards, passbooks, etc. Specifically, when the card reader 33 accepts a cash card or the passbook handling unit 35a accepts a passbook, the account transaction execution unit 38a specifies an account from the cash card or the passbook, and performs a transaction for the account.

For example, when the transaction is transfer, the account transaction execution unit 38a accepts inputs of a personal identification number, a destination account, and a monetary amount from the input unit 32, and executes transfer via the financial network communication unit 36a. When the transaction is withdrawal, the account transaction execution unit 38a accepts inputs of a personal identification number and a monetary amount from the input unit 32, and dispenses money from the banknote handling unit 35b. When the transaction is deposit, the account transaction execution unit 38a performs withdrawal of money from the banknote handling unit 35b and the coin handling unit 35c. When transfer, deposit, or withdrawal is performed with a passbook being accepted, the account transaction execution unit 38a enters the content of the transaction on the passbook and discharges the passbook. Upon accepting an operation of updating a passbook, the account transaction execution unit 38a acquires unentered transactions through the financial network communication unit 36a, enters the transactions on the passbook, and discharges the passbook.

Upon being notified of a withdrawal limit from the management device 20, the withdrawal limit management unit 38b registers the notified withdrawal limit in the withdrawal limit data 37b. Money corresponding to the withdrawal limit is in the state of being reserved for withdrawal based on a withdrawal code, and a remainder obtained by deducting the total of withdrawal limits from the inventory amount corresponds to money withdrawable from the automatic teller machine 30.

The withdrawal code processing unit 38c executes withdrawal based on a withdrawal code. Specifically, when a customer terminal device 10 on which a withdrawal code is displayed is held over the code reader 34, the code reader 34 captures an image of the withdrawal code, and the withdrawal code processing unit 38c reads the withdrawal code and transmits the withdrawal code to the management device 20 via the external network communication unit 36b.

As already described above, the management device 20 performs authentication of the withdrawal code received from the automatic teller machine 30. When the authentication has succeeded, the management device 20 transmits a withdrawal approval notification to the automatic teller machine 30. Upon receiving the withdrawal approval notification from the management device 20, the withdrawal code processing unit 38c dispenses money corresponding to the withdrawal limit associated with the withdrawal code. Only a part of the withdrawal limit may be withdrawable.

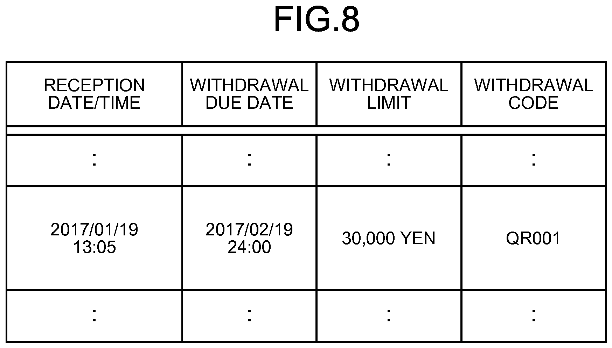

FIG. 8 is a diagram showing an example of the withdrawal limit data shown in FIG. 7. As shown in FIG. 8, the withdrawal limit data 37b indicates, in an associated manner, reception date/time, withdrawal due date, withdrawal limit, withdrawal code, etc.

FIG. 8 shows a state where reception date/time "2017/01/19, 13:05", withdrawal due date "2017/02/19, 24:00", withdrawal limit "30,000 yen", and withdrawal code "QR001" are associated with each other.

### <System operation>

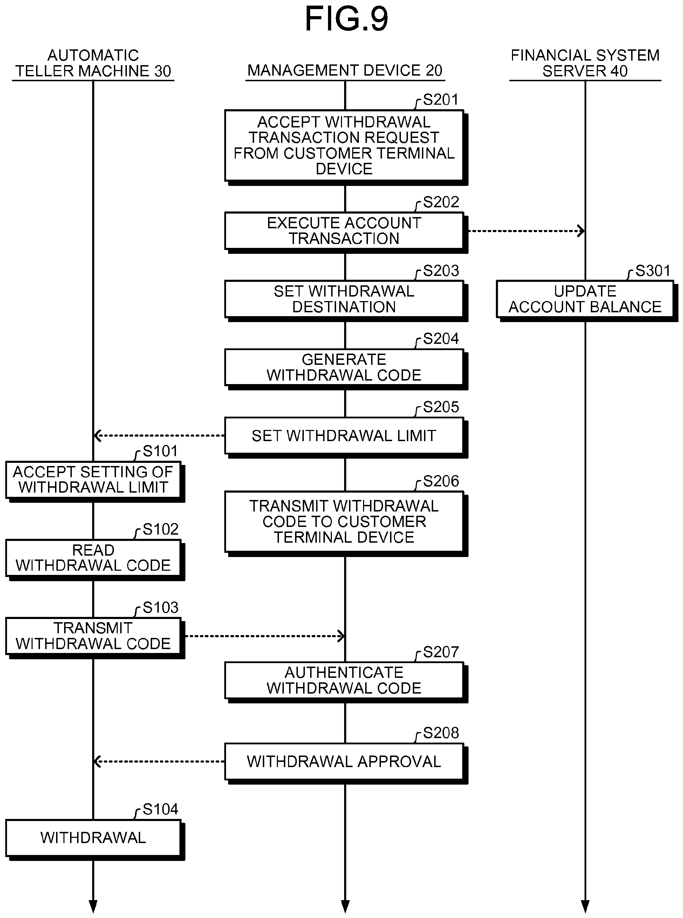

Next, a processing procedure of the customer transaction system according to the first embodiment will be described. FIG. 9 is a flowchart showing the processing procedure of the customer transaction system according to the first embodiment. First, when the management device 20 has received a withdrawal transaction request from the customer terminal device 10 (step S201), the management device 20 executes an account transaction based on the withdrawal transaction request (step S202). This account transaction is performed through internet banking, and the financial system server 40 deducts a withdrawal amount from an account balance to update the account balance (step S301).

Thereafter, the management device 20 sets a withdrawal destination (step S203), generates a withdrawal code (step S204), and performs setting of a withdrawal limit on an automatic teller machine 30 that is the withdrawal destination (step S205). Setting of a withdrawal due date or the like may be performed together with setting the withdrawal destination.

The automatic teller machine 30 accepts the withdrawal limit set by the management device 20 (step S101). The accepted withdrawal limit is stored in the memory 37. The automatic teller machine 30 operates while retaining money corresponding to the withdrawal limit.

The management device 20 transmits the generated withdrawal code to a designated customer terminal device 10 (step S206). The transmitted withdrawal code is stored in the customer terminal device 10. An operator, carrying the customer terminal device 10, goes to the installation place of the automatic teller machine 30, and holds the customer terminal device 10 with the withdrawal code being displayed on the display unit, over the automatic teller machine 30. Then, the automatic teller machine 30 captures an image of the withdrawal code and reads the withdrawal code from the captured image (step S102). The automatic teller machine 30 transmits the withdrawal code to the management device 20 (step S103).

The management device 20 performs authentication of the withdrawal code received from the automatic teller machine 30 (step S207). When the authentication has succeeded, the management device 20 notifies the automatic teller machine 30 of withdrawal approval (step S208). The automatic teller machine 30 receives the withdrawal approval from the management device 20, and executes withdrawal of money corresponding to the withdrawal limit associated with the withdrawal code (step S104) to end the processing.

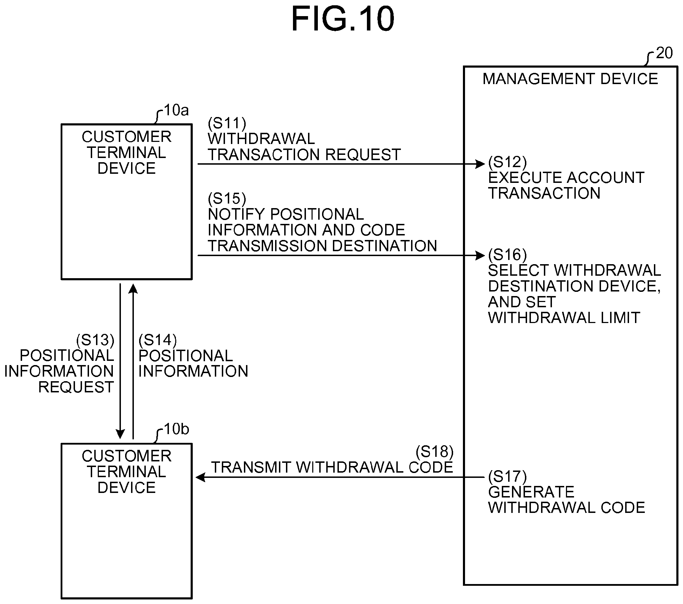

Next, notification of positional information of the customer terminal device 10 that will be used for receiving withdrawn money will be described with reference to FIG. 10. FIG. 10 is a diagram for explaining notification of positional information of the customer terminal device 10 that will be used for receiving the withdrawn money. As shown in FIG. 10, firstly, when the customer terminal device 10a transmits a withdrawal transaction request to the management device 20 (S11), the management device 20 executes an account transaction through internet banking to update the account balance (S12).

Thereafter, the customer terminal device 10a transmits a request for positional information to the customer terminal device 10b that will be used for receiving withdrawn money (S13). The customer terminal device 10b specifies its positional information by using a GPS or the like, and notifies the customer terminal device 10a of the positional information (S14) .

The customer terminal device 10a notifies the management device 20 of the positional information of the customer terminal device 10b and a code transmission destination (S15). As the code transmission destination, the address of the customer terminal device 10b may be used, for example.

Upon receiving the notification from the customer terminal device 10a, the management device 20 performs selection of a withdrawal destination device and setting of a withdrawal limit (S16). Since the positional information of the customer terminal device 10b is used for selection of a withdrawal destination device, a device located near the customer terminal device 10b can be selected as the withdrawal destination device. The management device 20 generates a withdrawal code (S17) and transmits the withdrawal code to the customer terminal device 10b that is the code transmission destination (S18).

As described above, in the customer transaction system according to the first embodiment, the customer terminal device 10a transmits a transaction request including a withdrawal amount and the management device 20 generates a withdrawal code from the withdrawal amount included in the transaction request, transmits the withdrawal code to the customer terminal device 10b, and notifies the automatic teller machine 30 of a withdrawal limit. The automatic teller machine 30 sets the notified withdrawal limit, and performs a money withdrawal process based on a withdrawal code when acquiring the withdrawal code from the customer terminal device 10b. Therefore, a customer, who is an operator of the customer terminal device 10a, can efficiently and speedily give cash to an operator of the customer terminal device 10b, who cannot receive the cash by performing an account transaction in a financial institution.

### [Second embodiment]

In the first embodiment, an account balance is reduced to establish a withdrawal transaction on the financial institution side when a withdrawal code is set. However, a withdrawal transaction on the financial institution side may be established when money is withdrawn from automatic teller machine 30. In this second embodiment, a configuration in which a withdrawal transaction on the financial institution side is established when money is withdrawn from automatic teller machine 30, will be described.

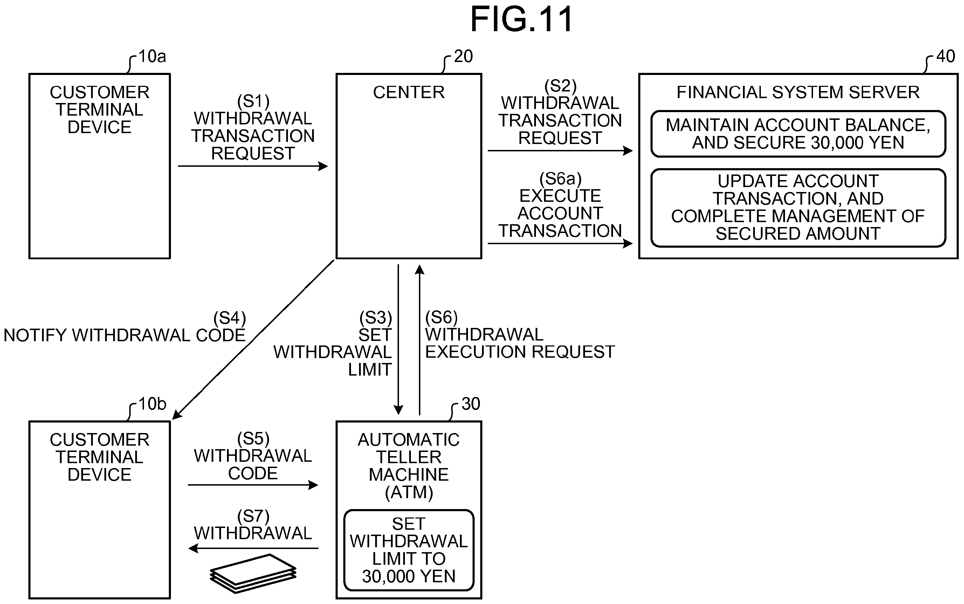

FIG. 11 is a diagram for explaining the concept of a customer transaction system according to the second embodiment. In FIG. 11, firstly, the customer terminal device 10a receives an operation performed by a customer, and transmits a withdrawal transaction request including a withdrawal amount to the management device 20 (S1).

Upon receiving the withdrawal transaction request from the customer terminal device 10a, the management device 20 performs a withdrawal transaction request to the financial system server 40 (S2). Upon receiving the withdrawal transaction request from the management device 20, the financial system server 40 secures the withdrawal amount. That is, while the account balance is maintained, the subsequent transaction is restricted so as to leave the secured monetary amount in the account balance. In FIG. 11, the withdrawal amount, 30,000 yen, is secured in the account balance while the account balance is maintained.

Thereafter, the management device 20 sets a withdrawal limit based on the withdrawal amount on the automatic teller machine 30 (S3). In FIG. 1, the automatic teller machine 30 sets a withdrawal limit of 30,000 yen. In addition, the management device 20 generates a withdrawal code used for withdrawal, and notifies the customer terminal device 10b of the withdrawal code (S4). The withdrawal code includes a withdrawable monetary amount, information relating to the automatic teller machine 30 on which the withdrawal limit is set, etc.

The customer terminal device 10b stores therein the withdrawal code received from the management device 20, and displays the withdrawal code on the display unit. The operator of the customer terminal device 10b, who is carrying the customer terminal device 10b, goes to the installation place of the automatic teller machine 30, and holds the customer terminal device 10 with the withdrawal code being displayed on the display unit, over the automatic teller machine 30. Then, the automatic teller machine 30 captures an image of the withdrawal code and reads the withdrawal code from the image (S5).

The automatic teller machine 30 transmits the read withdrawal code to the management device 20 to perform a withdrawal execution request (S6). The management device 20 performs authentication of the withdrawal code received from the automatic teller machine 30. When the authentication has succeeded, the management device 20 executes an account transaction to the financial system server 40 (S6a). As a result of the account transaction execution by the management device 20, the financial system server 40 deducts the withdrawal amount from the account balance to erase the secured monetary amount. In FIG. 1, the withdrawal amount, 30,000 yen, is deducted from the account balance to complete management of the secured monetary amount. Thereafter, the management device 20 notifies the automatic teller machine 30 of withdrawal approval, and the automatic teller machine 30 performs withdrawal based on the monetary amount designated by the withdrawal code (S7).

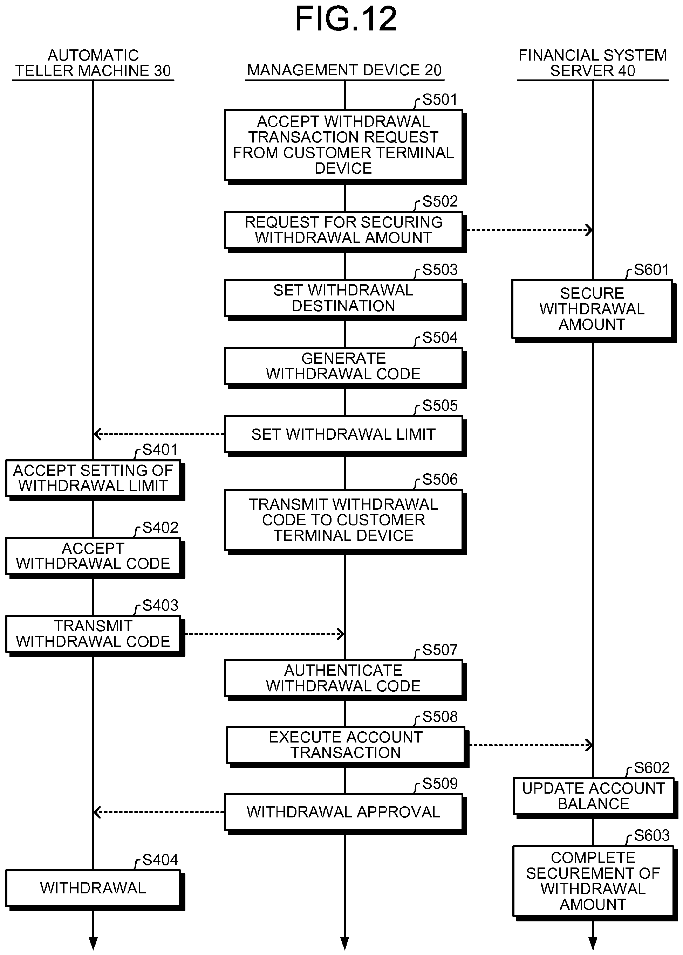

Next, a processing procedure of the customer transaction system according to the second embodiment will be described. FIG. 12 is a flowchart showing a processing procedure of the customer transaction system according to the second embodiment. First, when the management device 20 has received a withdrawal transaction request from the customer terminal device 10 (step S501), the management device 20 requests securing of the withdrawal amount on the basis of the withdrawal transaction request (step S502). Upon receiving the request from the management device 20, the financial system server 40 secures the withdrawal amount (step S601).

Thereafter, the management device 20 sets a withdrawal destination (step S503), generates a withdrawal code (step S504), and performs setting of a withdrawal limit on an automatic teller machine 30 that is the withdrawal destination (step S505). Setting of withdrawal due date or the like may be performed together with setting of the withdrawal destination.

The automatic teller machine 30 accepts the withdrawal limit set by the management device 20 (step S401). The accepted withdrawal limit is stored in the memory 37, so that the automatic teller machine 30 operates while retaining money corresponding to the withdrawal limit.

The management device 20 transmits the generated withdrawal code to a designated customer terminal device 10 (step S506). The transmitted withdrawal code is stored in the customer terminal device 10. An operator, carrying the customer terminal device 10, goes to the installation place of the automatic teller machine 30, and holds the customer terminal device 10 with the withdrawal code being displayed on the display unit, over the automatic teller machine 30. Then, the automatic teller machine 30 captures an image of the withdrawal code and reads the withdrawal code from the image (step S402), and transmits the withdrawal code to the management device 20 (step S403).

The management device 20 performs authentication of the withdrawal code received from the automatic teller machine 30 (step S507). When the authentication has succeeded, the management device 20 executes an account transaction (step S508). This account transaction is performed through internet banking. The financial system server 40 deducts the withdrawal amount from the account balance to update the account balance (step S602), and completes management of the secured monetary amount (step S603). Thereafter, the management device 20 notifies the automatic teller machine 30 of withdrawal approval (step S509). Upon receiving the withdrawal approval from the management device 20, the automatic teller machine 30 executes withdrawal of money corresponding to the withdrawal limit associated with the withdrawal code (step S404) to end the processing.

As described above, the customer transaction system according to the second embodiment enables a customer to efficiently and speedily give cash to a person, who cannot receive the cash by performing an account transaction in a financial institution, as in the first embodiment. In addition, since a withdrawal transaction on the financial account side can be established at the time of withdrawal in the automatic teller machine 30, the account balance can be accurately handled.

In the first and second embodiments, the automatic teller machine 30 capable of performing normal transactions using cash cards and passbooks is used for a withdrawal transaction using a withdrawal code. However, any device such as a money changer can be used for a withdrawal transaction using a withdrawal code as long as the device is capable of depositing/dispensing of cash.

In the present embodiments, the automatic teller machine 30 executes a transaction relating to a withdrawal code via the management device 20. However, the automatic teller machine 30 may directly perform internet banking to execute a transaction relating to a withdrawal code. An example of this configuration is as follows. That is, a withdrawal code generated by the management device 20 is transmitted to an automatic teller machine 30 that is a designated device. Upon receiving the withdrawal code, the automatic teller machine 30 performs authentication of the withdrawal code by itself without performing communication with the management device 20. When the authentication has succeeded, the automatic teller machine 30 communicates with the financial system server 40, updates the account balance, and executes withdrawal.

In the present embodiments, the withdrawal code displayed on the display unit 11 of the customer terminal device 10 is read by the automatic teller machine 30. However, the withdrawal code may be printed to be used.

Each of the components described in the above embodiments is only schematically illustrated in the figures, and does not need to be physically configured as illustrated in the figures. That is, a specific form of distribution/integration of the respective devices is not limited to the form illustrated in the figures. The entire or part of the devices may be configured to be functionally or physically distributed/integrated in an arbitrary unit corresponding to various loads and/or use situations.

### [INDUSTRIAL APPLICABILITY]

The customer transaction system, the automatic teller machine, and the customer transaction method according to the present invention is useful for a customer to efficiently and speedily give cash to a person who cannot perform an account transaction in a financial institution.

### [DESCRIPTION OF THE REFERENCE CHARACTERS]

- 10, 10a, 10b: Customer terminal device
- 11, 21, 31: Display unit
- 12, 22, 32: Input unit
- 13: Wireless communication unit
- 14: GPS signal receiving unit
- 15: Camera
- 16, 25, 37: Memory
- 16a: Withdrawal code
- 17, 26, 38: Control unit
- 17a: Account transaction processing unit
- 17b: Withdrawal process management unit
- 17c: Positional information acquisition unit
- 17d: Withdrawal code management unit
- 20: Management device
- 23: Financial network communication unit
- 24: External network communication unit
- 25a: Withdrawal destination device data
- 25b: Withdrawal processing data
- 26a: Account transaction execution unit
- 26b: Withdrawal process setting unit
- 26c: Withdrawal limit setting unit
- 26d: Withdrawal code generating unit
- 26e: Withdrawal processing unit
- 30, 30a, 30b: Automatic teller machine
- 33: Card reader
- 34: Code reader
- 35a: Passbook handling unit
- 35b: Banknote handling unit
- 35c: Coin handling unit
- 36a: Financial network communication unit
- 36b: External network communication unit
- 37a: Inventory amount data
- 37b: Withdrawal limit data
- 38a: Account transaction execution unit
- 38b: Withdrawal limit management unit
- 38c: Withdrawal code processing unit
- 40: Financial system server
- N1, N2: Network

## Claims

1. A customer transaction system comprising:
a customer terminal device having a transaction request unit configured to perform a transaction request including a withdrawal amount;
a management device including
a transaction data generating unit configured to generate transaction data from the withdrawal amount that is included in the transaction request from the transaction request unit of the customer terminal device,
a transaction data transmission unit configured to transmit the transaction data generated by the transaction data generating unit to the customer terminal device, and
a notification unit configured to notify a withdrawal limit; and
an automatic teller machine including
a withdrawal limit setting unit configured to set the withdrawal limit notified from the management device, and
a control unit configured to acquire the transaction data from the customer terminal device, and control withdrawal of money on the basis of the acquired transaction data.

2. The customer transaction system according to claim 1, wherein
upon accepting, from the customer terminal device, information relating to another customer terminal device that serves as a destination to which the transaction data is transmitted, the transaction data transmission unit transmits the transaction data to the other customer terminal device.

3. The customer transaction system according to claim 1 or 2, wherein the transaction data generating unit generates a transaction code, which is either a one-dimensional code or a two-dimensional code, corresponding to the transaction data.

4. The customer transaction system according to any one of claims 1 to 3, wherein the management device notifies the customer terminal device of an automatic teller machine that is a candidate for a nearest withdrawal destination, on the basis of positional information of the customer terminal.

5. The customer transaction system according to any one of claims 1 to 4, wherein the management device further includes a specification unit configured to specify an automatic teller machine that performs withdrawal of money, on the basis of an instruction from the customer terminal.

6. The customer transaction system according to any one of claims 1 to 5, wherein the management device notifies the automatic teller machine of a limitation on a withdrawal amount within the withdrawal limit, on the basis of an instruction from the customer terminal device.

7. The customer transaction system according to any one of claims 1 to 6, wherein the management device further includes a withdrawal cancel requesting unit configured to cancel withdrawal if money has not been withdrawn by the customer terminal device within a predetermined time period in the automatic teller machine.

8. An automatic teller machine comprising:
a withdrawal limit setting unit configured to set a withdrawal limit corresponding to a withdrawal amount included in a transaction request;
a reading unit configured to read a transaction code displayed on a customer terminal device; and
a control unit configured to perform control such that a withdrawal amount corresponding to the transaction code read by the reading unit is withdrawn within the range of a withdrawal amount set in the withdrawal limit.

9. A customer transaction method comprising:
a transaction request step in which a customer terminal device performs a transaction request including a withdrawal amount;
a transaction data generation step in which a management device communicable with the customer terminal device generates transaction data from the withdrawal amount included in the transaction request;
a transaction data transmission step in which the management device transmits the transaction data generated in the transaction data generation step to the customer terminal device;
a notification step in which the management device notifies the automatic teller machine of a withdrawal limit;
a withdrawal limit setting step in which an automatic teller machine sets the withdrawal limit notified from the management device;
an acquisition step in which the automatic teller machine acquires the transaction data from the customer terminal device; and
a control step in which control is performed such that the automatic teller machine performs withdrawal of money on the basis of the transaction data acquired in the acquisition step.
